Europäisches Patentamt

European Patent Office

Office européen des brevets

(19)

(11) Veröffentlichungsnummer: **0 214 623**
**B1**

(12) **EUROPÄISCHE PATENTSCHRIFT**

(45) Veröffentlichungstag der Patentschrift:
22.11.90

(51) Int. Cl.⁵: **B60C 27/16**, B60C 27/04,
B60B 15/26, F16B 23/00

(21) Anmeldenummer: 86112282.8

(22) Anmeldetag: 05.09.86

(54) **Befestigung von Sicherungsschrauben an Felgenschrauben.**

(30) Priorität: 13.09.85 DE 8526164 U
19.10.85 DE 8529687 U
29.10.85 DE 8530606 U
29.08.86 DE 8623171 U

(43) Veröffentlichungstag der Anmeldung:
18.03.87 Patentblatt 87/12

(45) Bekanntmachung des Hinweises auf die Patenterteilung:
22.11.90 Patentblatt 90/47

(84) Benannte Vertragsstaaten:
AT BE CH DE FR GB IT LI NL SE

(56) Entgegenhaltungen:
EP-A- 0 056 130
EP-A- 0 134 309
BE-A- 742 788
DE-U- 8 325 341

(73) Patentinhaber: Confon AG, Langenhag 31,
CH-9424 Rheineck(CH)

(72) Erfinder: Preusker, Rosel, geboren Schumacher, Kleine
Nisterstrasse 15, D-5239 Atzelgift(DE)
Erfinder: Preusker, Werner, Kleine Nisterstrasse 15,
D-5239 Atzelgift(DE)

(74) Vertreter: Richter, Werdermann & Gerbaulet, Neuer
Wall 10, D-2000 Hamburg 36(DE)

ACTORUM AG

**Beschreibung**

Die Erfindung betrifft die Befestigung von Sicherungsschrauben an den Köpfen, insbesondere Sechskantköpfen von Felgenschrauben, -bolzen, oder -muttern zum Befestigen der Nabe einer Gleitschutzvorrichtung für luftbereifte Fahrzeugräder, insbesondere auf Eis- und Schneeflächen, die aus der an der Radscheibe bzw. Felge befestigbaren Nabe, die mit Durchbrechungen zum Befestigen an den Felgenschrauben, Radbolzen od.dgl. versehen ist, und einer auf der Nabe mittels eines auf einem an der Nabe angeformten Aufnahmeteil befestigbaren Sicherungsringes gehaltenen und verriegelbaren Tragscheibe mit einer Anzahl von in gleichem Abstand voneinander radial verlaufenden Gleitschutzarmen aus einem vorgebogenen, die Reifenlauffläche übergreifenden und außenseitig und innenseitig an ihren freien Enden ein Greifprofil tragenden Profil aus einem Kunststoff oder einem anderen geeigneten Werkstoff mit Spikes oder Metallkörpern außenseitig besteht.

Für das Fahren mit Kraftfahrzeugen im Winter auf schneebedeckten Steigungen und über Gefällstrecken werden neben Schneeketten auch Winterreifen, sogenannte Haftreifen, verwendet. Schneeketten sind wenig beliebt, da ihr Aufziehen auf die Fahrzeugreifen oftmals mühevoll ist und sie so gefahren werden müssen, daß die Fahrbahn nicht beschädigt wird, d.h. daß auf nach schnee- oder eisbedeckten Straßenabschnitten folgenden trockenen Fahrbahnabschnitten die Schneeketten abzunehmen sind, zumal die Schneeketten beim Fahren auf trockenen Fahrbahnen einem hohen Verschleiß unterworfen sind und darüber hinaus keine hohen Geschwindigkeiten zulassen. Insbesondere auf kurzfristig mit Eis bedeckten Straßen, z.B. bei durch auf gefrorene Fahrbahndecken auffallendem Sprühregen erzeugten Eisflächen, stehen Schneeketten und Haftreifen oft nicht zur Verfügung. Auch die mit Spikes versehenen Reifen sind nicht immer anwendbar!

Neben Schneeketten und Haftreifen sind Anfahrhilfen bekannt, die jedoch keinen Ersatz für Schneeketten und Haftreifen darstellen. Diese Anfahrhilfen, die aus auf den Reifen aufgesetzten Klemmbügeln bestehen, dienen lediglich dazu, ein Fahrzeug aus Morast oder Schnee ein kurzes Stück herauszufahren.

Durch die gattungsbildende EP-A 0 134 309 ist eine Gleitschutzvorrichtung für luftbereifte Fahrzeugräder, insbesondere auf Eis- und Schneeflächen, bekannt, die aus einer an der Radscheibe bzw. Felge eines Rades befestigbaren Nabe, die mit Durchbrechungen zum Befestigen an den Felgenschrauben, Radbolzen od.dgl. versehen ist, und aus einer auf der Befestigungsscheibe mittels eines Sicherungsringes gehaltenen und verriegelbaren Tragscheibe mit einer Anzahl von in gleichem Abstand voneinander radial verlaufenden Gleitschutzarmen aus einem vorgebogenen, die Reifenlauffläche übergreifenden und außenseitig und innenseitig an ihren freien Enden ein Greifprofil tragenden Profil aus einem Kunststoff oder einem anderen geeigneten Werkstoff und mit außenseitig angebrachten Spikes oder Metallkörpern besteht. Diese Gleitschutzvorrichtung weist zur Befestigung der Tragscheibe an der Radscheibe bzw. Felge eines Rades eine kreisförmige Befestigungsscheibe mit einer Anzahl von Durchbrechungen für die Felgenschrauben, Radbolzen od.dgl. auf, die zentrisch eine kreisförmige, gegenüber dem Durchmesser der Befestigungsscheibe einen kleineren Durchmesser aufweisende Nabe trägt, die in einem Abstand von der Befestigungsscheibe benachbart zu ihrem oberen Rand an ihrem Umfang eine Anzahl von wulstartigen Ansätzen mit unterhalb diesen ausgebildeten, sich konisch von Einführöffnungen verjüngenden in Nabenumfangsrichtung verlaufenden Gleit- und Führungsbahnen aufweist und die die Nabe umschließende Tragscheibe mit den Gleitschutzarmen trägt, die mittels eines auf die Nabe aufgesetzten Sicherungsringes gesichert ist, der in die Gleit- und Führungsbahnen an der Nabe einführbare, eine bajonettartige Verriegelung bewirkende Verriegelungsstege mit sich zu den Einführöffnungen hin erstreckenden, konisch sich verjüngenden Abschnitten und an seiner Innenwandfläche mindestens einen blattfederartigen Schnäpper aufweist, der in verriegelter Stellung des Sicherungsringes an der Befestigungsscheibe in einer Ausnehmung am Umfang der Nabe eingreift und sich an einem Anschlag gegen ungewolltes Entriegeln abstützt und mittels eines Entriegelungsschlüssels aus der Verriegelungsstellung in eine Entriegelungsstellung überführbar ist.

Bei dieser Art von Gleitschutzvorrichtung verbleibt an der Radscheibe bzw. Felge immer die Nabe mit dem speziell ausgebildeten Sicherungsring, während für den Betriebszustand der Gleitschutzvorrichtung die Tragscheibe mit den Gleitschutzarmen auf die Nabe aufgesetzt und an dieser mittels des Sicherungsringes verriegelt wird. Um die Nabe an der Radscheibe bzw. Felge befestigen zu können, ist die Nabe mit Durchbrechungen zum Befestigen an den Felgenschrauben, Radbolzen od.dgl. versehen. Hierzu weist die Nabe eine vorgegebene Anzahl von Durchbrechungen zum Befestigen an den Felgenschrauben, Radbolzen od.dgl. auf. Zum Befestigen dieser Gleitschutzvorrichtung sowie von Radschraubenschlössern, Radmutternschlössern, besonderen Blenden und Meßeinrichtungen werden eine Vielzahl von Sicherungsschrauben, Sonderradschrauben und Radmuttern mit unterschiedlichen Gewinden, Gewindelängen, Kugeln, Kegeln, Schiffchen, Flachbunden, Aufsteckkehlen, Schlüsselweiten und Materialien benötigt. Außerdem wechseln die Befestigungselemente oftmals bei neuen Fahrzeugtypen. Mit dieser bekannten Gleitschutzvorrichtung ist nicht das Problem gelöst, verschiedenartige Schlüsselweiten so auszugleichen, daß mit wenigen Schlüsselweiten verschiedene Felgenschraubenköpfe betätigt werden können.

Die Erfindung löst die Aufgabe, eine Befestigung für eine Gleitschutzvorrichtung der eingangs genannten Art zu schaffen, die mit den Köpfen von Felgenschrauben, -bolzen oder -muttern verbindbar ist, mit der verschiedenartige Schlüsselweiten ausgeglichen werden können und mit der verhältnismäßig große Toleranzen der Schlüsselweiten trotz Gewährleistung eines sicheren Sitzes überbrückbar sind; außerdem soll die Befestigung leicht und ohne Spezialwerkzeuge anbringbar sein. Es soll eine leichte Lösbarkeit und oftmalige Wiederverwendbarkeit gegeben sein.

Diese Aufgabe wird durch die im Patentanspruch 1 angegebenen Merkmale gelöst. Hiernach ist ein Adapter für Köpfe von Felgenschrauben, -bolzen, oder -muttern wie zum Befestigen der Nabe einer Gleitschutzvorrichtung für luftbereifte Fahrzeugräder, insbesondere auf Eis- und Schneeflächen geschaffen, wobei die Gleitschutzvorrichtung aus einer an der Radscheibe bzw. Felge befestigbaren Nabe, die mit Durchbrechungen zum Befestigen an den Felgenschrauben, Radbolzen od.dgl. versehen ist und aus einer auf der Nabe mittels eines auf einem an der Nabe angeformten Aufnahmeteil befestigbaren Sicherungsringes gehaltenen und verriegelbaren Tragscheibe mit einer Anzahl von in gleichem Abstand voneinander radial verlaufenden Gleitschutzarmen aus einem vorgebogenen, die Reifenlauffläche übergreifenden und außenseitig und innenseitig an ihren freien Enden ein Greifprofil tragenden Profil aus einem Kunststoff oder einem anderen geeigneten Werkstoff mit Spikes oder Metallkörpern außenseitig besteht. Der Adapter ist hierbei so ausgebildet, daß er den Kopf einer Felgenschraube, -bolzens oder -mutter umgreift, wobei der Adapter aus einem kappenartigen Außenteil und einem von dem Außenteil übergriffenen kappenartigen Innenteil mit festen und/oder losen Formgreifern besteht, wobei die Innenteilwand des Innenteils zur Ausbildung von spannzangenartigen Abschnitten als Formgreifer Längsschlitze aufweist oder als einzelne Formkörper ausgebildet sind, wobei durch Ineinanderschrauben und Ineinanderdrücken des Außenteils über das Innenteil in Schraubenlängsrichtung die Formgreifer gegen den Bolzen, Mutter od.dgl., den Schrauben u.dgl. zur Ausbildung einer dauerhaften, sicheren Verbindung zwischen dem Adapter und den Bolzen, Muttern oder dem Schraubenkopf preßbar sind, wobei die Verbindung wieder lösbar und wieder verwendbar ist, und wobei über den Adapter die Nabe mit der Gleitschutzvorrichtung mit den Bolzen, Muttern, Schraubenköpfen u.dgl. mittels der Gewindebohrung mit Sicherungs-Schrauben verbindbar ist.

Es ist damit ein spannzangenartiger Adapter geschaffen, der aus zwei Bauteilen besteht: einem Innteil, das an dem einen Ende eine Gewindebohrung und ein Außengewinde aufweist. An dem anderen Ende weist es eine spannzangenartige Innensechskantaufnahme auf, die geschlitzt ist und außen rund mit einem angeformten Konus gestaltet ist. Ferner dem Außenteil, das an seinem einen Ende eine Gewindebohrung, passend zu dem Außengewinde des Innenteils und einen Außensechskant mit der gleichen Schlüsselweite des Innensechskants des Innenteils, aufweist. An dem anderen Ende weist das Außenteil einen Gegenkonus zum Innenteil auf. Beim Aufschrauben des Außenteils über das Innenteil wird die spannzangenartige Innensechskantaufnahme durch die beiden Konen zusammengepreßt und der Adapter, wenn er über eine Sechskantmutter oder über einen Sechskantkopf einer Schraube geschoben ist, mit dieser fest und sicher verbunden. Durch ein Zurückschrauben des Außenteils wird die Verbindung wieder gelöst. Die Gewindebohrung im Innenteil dient zur Befestigung der Nabe der Gleitschutzvorrichtung an dem Adapter mittels einer Sicherungs-Schraube. Da das Ende des Innenteils mit der Gewindebohrung über das Außenteil herausragt, wird der Abstand zur Mutter oder Schraube durch Schlüsselweitentoleranzen nicht verändert. Da es nur wenige Schlüsselweiten gibt, sind auch nur wenige Adaptertypen für alle Autotypen und Marken nötig und vorrätig zu halten.

Vorteilhafte Ausgestaltungen der Erfindung sind in den Unteransprüchen gekennzeichnet.

Im folgenden wird der Gegenstand der Erfindung in den Zeichnungen erläutert. Es zeigt

Fig. 1 als teilweise senkrechter Schnitt ein Kraftfahrzeugrad mit die Reifenlauffläche übergreifenden Gleitschutzarmen einer Gleitschutzvorrichtung,

Fig. 2 in einer Ansicht von oben einen Abschnitt der die Gleitschutzarme tragenden Tragscheibe der Gleitschutzvorrichtung,

Fig. 3 in einer Ansicht von oben die Nabe für die Gleitschutzvorrichtung,

Fig. 4 einen senkrechten Schnitt der Nabe,

Fig. 5 eine Seitenansicht der Nabe,

Fig. 6 einen Verschlußbereich an der Nabe,

Fig. 7 in einer Ansicht von oben den Sicherungsring der Nabe für die Gleitschutzvorrichtung,

Fig. 8 in einer Ansicht von oben einen Entriegelungsschlüssel,

Fig. 9 in einer Vorderansicht den Entriegelungsschlüssel,

Fig. 10 teils in Ansicht, teils in einem senkrechten Schnitt einen auf einer Radbefestigungsschraube angeordneten Adapter in einer Ausführungsform, bei der die konisch ausgebildeten Wandflächenabschnitte des Außenteils und des Innenteils gegeneinanderdrückend sind,

Fig. 11 teils in Ansicht, teils in einem senkrechten Schnitt einen auf einer Radbefestigungsschraube angeordneten Adapter in einer Ausführungsform, bei der der Außenteilkonus gegen den Innenteilkonus ziehend ist,

Fig. 12 teils in Ansicht, teils in einem senkrechten Schnitt einen auf einer Radbefestigungsschraube angeordneten Adapter in einer Ausführungsform, bei der das Außenteil über das Innenteil geschoben ist,

Fig. 13 teils in Ansicht, teils in einem senkrechten Schnitt einen auf einer Radbefestigungsschraube angeordneten Adapter in einer Ausführungsform, bei der ein Doppelkonus mit losen Greifelementen vorgesehen ist,

Fig. 14 in einer Seitenansicht eines auf das Außengewinde des halsartigen Abschnittes des kappenförmigen Bauteils des Adapters aufschraubbare Mutter,

Fig. 15 einen senkrechten Schnitt durch die Mutter nach Fig. 14,

Fig. 16 einen senkrechten Schnitt des kappenförmigen Bauteils des Adapters mit spannzangenartigen Formgreifern,

Fig. 17 eine Ansicht von unten auf das Bauteil

gem. Fig. 16,

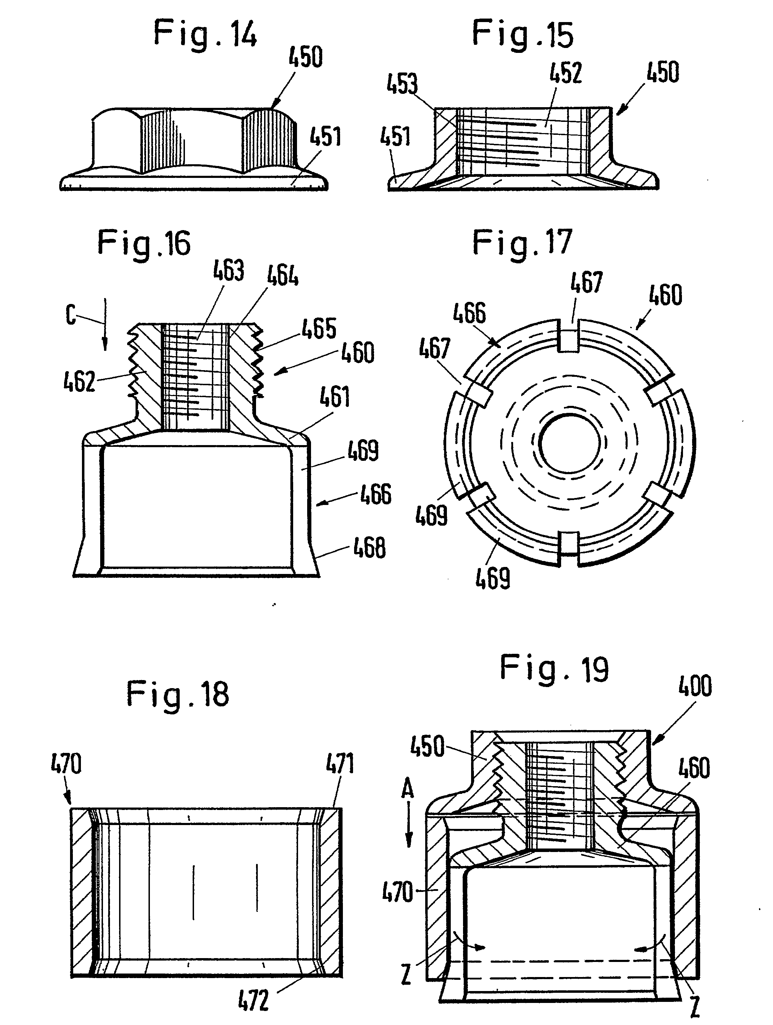

Fig. 18 einen senkrechten Schnitt durch die auf das kappenartige Bauteil aufgesetzte Spannhülse und

Fig. 19 in einem senkrechten Schnitt den aus der Mutter, dem kappenförmigen Bauteil und der Spannhülse bestehenden Adapter.

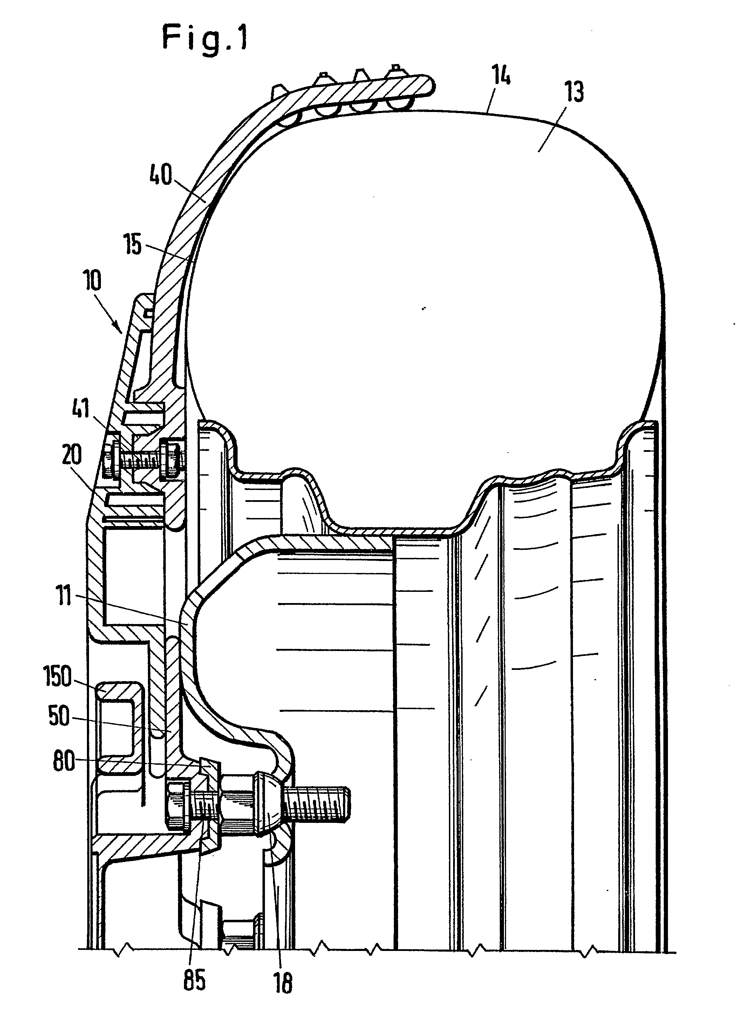

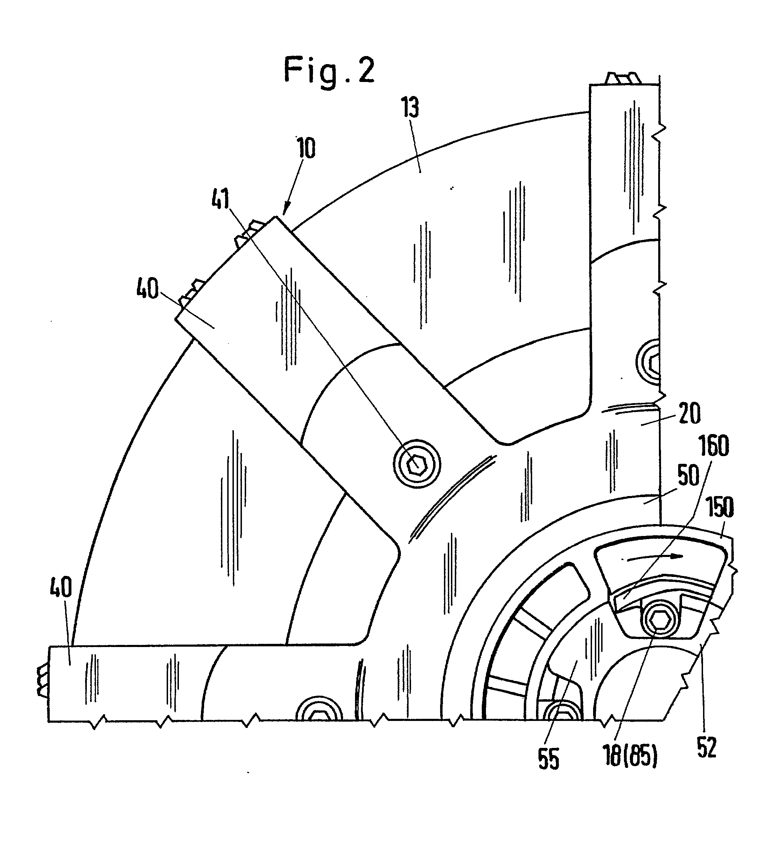

Wie Fig. 1 und 2 zeigen, besteht die Gleitschutzvorrichtung 10 aus einer mit einer mittigen Durchbrechung versehenen, d.h. ringförmigen, Tragscheibe 20, an der eine Anzahl radial verlaufender Gleitschutzarme 40 befestigt ist, die im gleichen Abstand voneinander angeordnet und um parallel zur Radscheibenlagerachse verlaufenden Achsen 41 in einem kleinen Bereich verschwenkbar sind. Diese Verschwenkbarkeit der Gleitschutzarme in einem kleinen Bereich ermöglicht es, bei stehendem Fahrzeug die Gleitschutzvorrichtung anbringen zu können. Bei den ersten Umdrehungen des Fahrzeugrades stellen sich die Gleitschutzarme 40 alle in einem gleichen Abstand zueinander auf, auch wenn während der Montage im Bereich der Reifenauflagefläche auf einem Untergrund, wie Straße od.dgl., die Gleitschutzarme seitlich zur Reifenauflagefläche zu liegen kommen.

Die Gleitschutzvorrichtung ist an dem mit einem Reifen 13 versehenen Rad, welches gleichzeitig die Felge darstellt, befestigt. Das Rad 11 ist mit einem in der Zeichnung nicht dargestellten Bremsteil versehen. Der Laufflächenbereich des Reifens 13 ist mit 14 und die Außenseitenfläche des Reifens mit 15 bezeichnet (Fig. 1).

Die Befestigung eines jeden Gleitschutzarmes 40 an der Tragscheibe 20 erfolgt mittels bolzen- oder nietartiger Verbindungsmittel, wobei auch eine lösbare Befestigung der Gleitschutzarme 40 an der Tragscheibe 20 möglich ist, um verschlissene Gleitschutzarme 40 austauschen zu können. Wie Fig. 2 zeigt, sind an der Tragscheibe 20 acht Gleitschutzarme 40 vorgesehen. Die Anzahl der Gleitschutzarme kann beliebig gewählt sein. Es müssen jedoch mindestens zwei Gleitschutzarme vorhanden sein. Alle Gleitschutzarme sind im gleichen Winkelabstand voneinander angeordnet. Jeder Gleitschutzarm 40 besteht aus federnd-elastischem Werkstoff, wie beispielsweise Federstahl, so daß ein elastisches Abbiegen des freien Endabschnittes eines jeden Gleitschutzarmes 40 in den Bereich der Lauffläche 14 des Reifens 13 möglich ist. Die Gleitschutzarme 40 sind derart vorgeformt, daß nach dem Ansetzen der Gleitschutzvorrichtung 10 an einem Fahrzeugrad die Gleitschutzarme mit ihren freien Enden die Reifenlauffläche 14 übergreifen. Anstelle von Federstahl können für die Herstellung der Gleitschutzarme 40 auch andere geeignete Werkstoffe Verwendung finden. So können die Gleitschutzarme 40 auch aus entsprechend geeigneten Kunststoffen bestehen.

An den freien Enden weisen die Gleitschutzarme 40 außenseitig Greifprofile auf, so daß eine hohe Griffigkeit erreichbar ist. Diese Greifprofile können auch als Spikes ausgebildet sein.

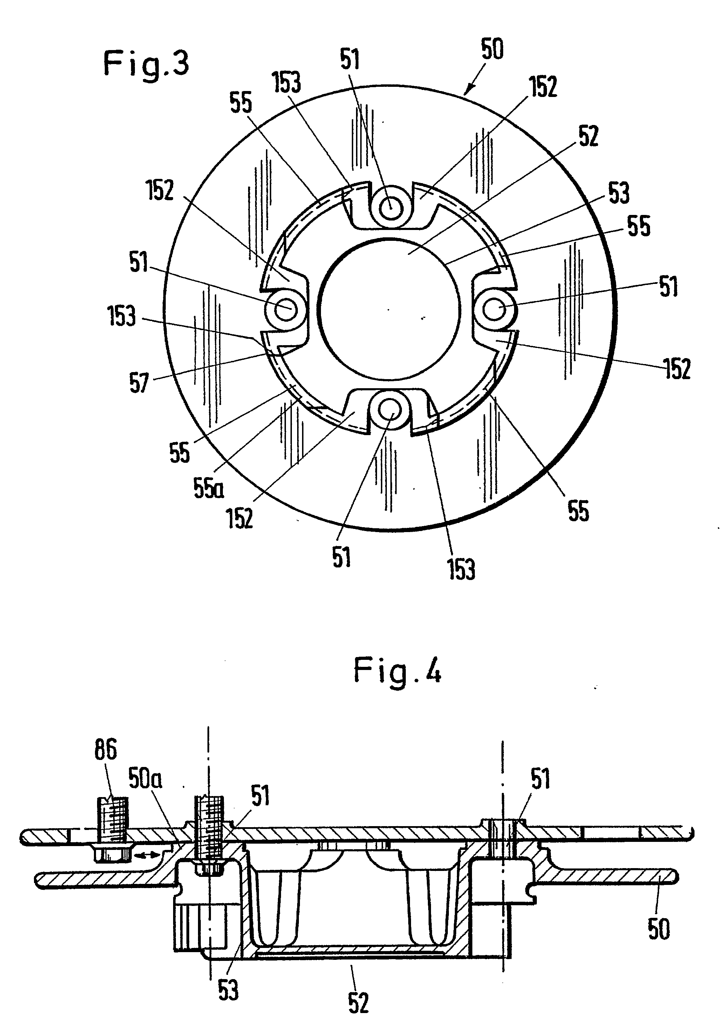

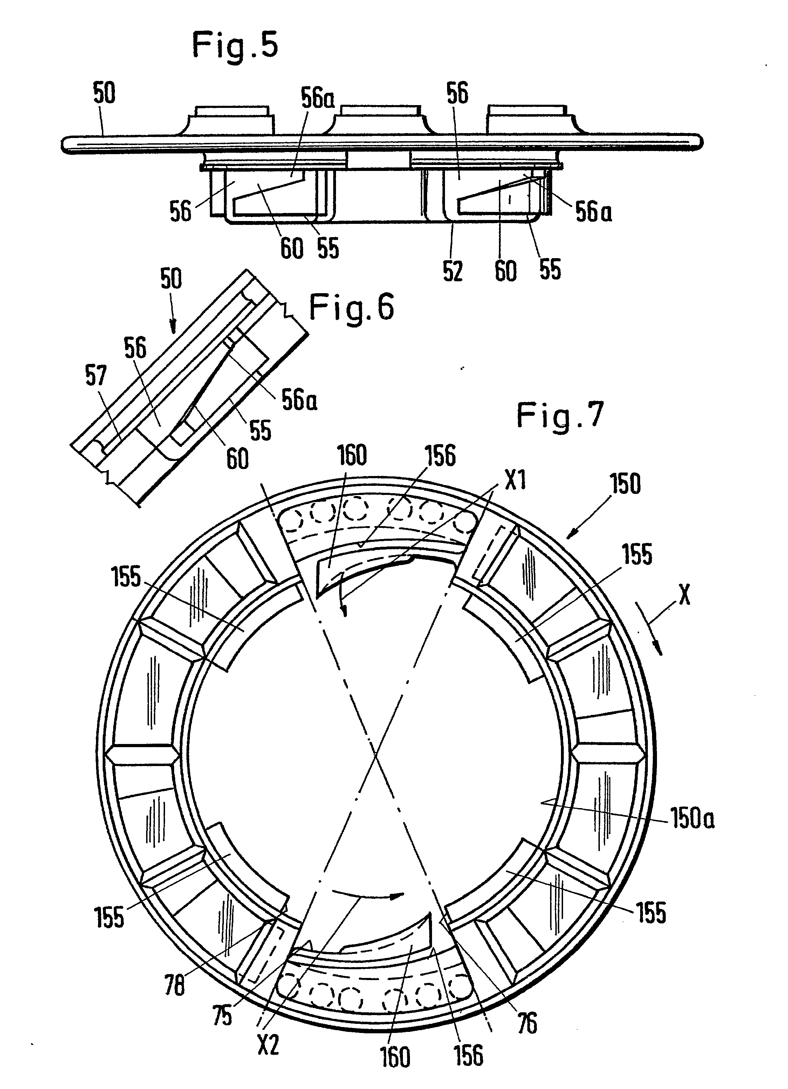

Die Befestigungseinrichtung für die Gleitschutzvorrichtung 10 an der Felge 11 eines Fahrzeugrades besteht aus einer Nabe 50 und einem Sicherungsring 150 (Fig. 3 und 7).

Die Nabe 50 ist mit einer Anzahl von Durchbrechungen 51 versehen, die zum Befestigen an den Felgenschrauben 18 dienen. Wie Fig. 1 zeigt, können die Felgenschrauben 18 zur Befestigung der Nabe 50 mit ein Innengewinde aufweisenden Bohrungen zur Aufnahme von Sicherungsschrauben 85 versehen sein, mittels der die Nabe 50 über die Felgenschraube an der Radfelge 11 befestigbar ist und die zum Befestigen der Nabe 50 an der nachfolgend näher beschriebenen Adapterscheibe oder an den Radschrauben oder Muttern dienen.

Die kreisförmige, scheibenförmige Nabe 50 weist mittig einen im Querschnitt kreisförmigen Aufnahmeteil 52 auf, der als zylindrischer Formkörper ausgebildet und integrierter Bestandteil der Nabe 50 ist. Dieser Aufnahmeteil 52 weist einen Durchmesser auf, der gegenüber dem Durchmesser der Nabe 50 kleiner ist.

An ihrem Außenumfang, und zwar benachbart zum oberen umlaufenden Rand 53, weist der Aufnahmeteil 52 eine Anzahl von wulstartigen Ansätzen 55 auf, die im gleichen Abstand voneinander angeordnet sind. Bei dem in Fig. 3 gezeigten Ausführungsbeispiel sind an dem Aufnahmeteil 52 der Nabe 50 vier aus dem Umfang des Aufnahmeteils 52 seitlich auskragende wulstartige Ansätze 55 vorgesehen.

Unterhalb eines jeden wulstartigen Ansatzes 55 ist eine Gleit- und Führungsbahn 60 ausgebildet. Diese Gleit- und Führungsbahn 60 ist als Ausnehmung ausgebildet und weist eine Einführöffnung 56 auf, von der sich die Gleit- und Führungsbahn 60 zum Endbereich konisch verjüngt, so daß die Einführungsöffnung 56 gegenüber dem Endbereich 56a größer bemessen ist. Die die Gleit- und Führungsbahn 60 bildende Ausnehmung ist hiernach keilförmig verlaufend und in dem zur Nabe 50 benachbarten Bereich durch eine Ringwulst 57 begrenzt. Der Endbereich 56a der Gleit- und Führungsbahn 60 weist ebenfalls eine Begrenzung in Form eines Anschlages auf, der jedoch nicht unbedingt vorhanden sein muß.

Die Ringwulst 57, die am Außenumfang des Aufnahmeteils 52 angeformt ist, stellt gleichzeitig die obere Begrenzung für die auf dem Aufnahmeteil 52 der Nabe 50 aufgesetzte Tragscheibe 20 dar (Fig. 3). Im Bereich der Durchbrechungen 51 ist diese Ringwulst 57 unterbrochen, da ein Teilabschnitt einer jeden Durchbrechung 51 als Teilbohrung bis in den Aufnahmeteil 52 geführt ist (Fig. 3).

Alle Gleit- und Führungsbahnen 60 unterhalb der wulstartigen Ansätze 55 sind so ausgebildet und angeordnet, daß ihre Einführöffnungen 56 dem jeweils vorangehenden Endbereich 56a zugekehrt sind.

Jeder wulstartige Ansatz 55 ist vorteilhafterweise in seinem oberen Bereich mit einer Abflachung 55a versehen, um das Aufsetzen des Sicherungsringes 150 zu erleichtern.

Der Aufnahmeteil 52 der Nabe 50 dient zur Aufnahme der Tragscheibe 20 mit den Gleitschutzarmen 40 der Gleitschutzvorrichtung 10 und zur Aufnahme des Sicherungsringes 150.

Die Sicherung der auf die Nabe 50 aufgesetzten Tragscheibe 20 der Gleitschutzvorrichtung 10 erfolgt mittels des Sicherungsringes 150. Dieser Sicherungsring 150 mit einem Außendurchmesser, der etwas geringer ist als der Durchmesser der Nabe 50 bzw. gleich dem Durchmesser dieser Nabe ist, weist an seiner Innenwandfläche 150a eine Anzahl von Verriegelungsstegen 155 auf, deren Anzahl der Anzahl der wulstartigen Ansätze 55 bzw. der Anzahl der Gleit- und Führungsbahnen 60 an dem Aufnahmeteil 52 der Nabe 50 entspricht. Diese Verriegelungsstege 155 sind so ausgebildet, daß sie in die Gleit- und Führungsbahnen 60 so einführbar sind, daß eine bajonettartige Verriegelung zwischen dem Sicherungsring 150 und dem Aufnahmeteil 52 bzw. der Nabe 50 erfolgt (Fig. 7). Die Verriegelungsstege 155 sind hiernach keilförmig ausgebildet, so daß bei auf die Nabe 50 aufgesetztem Sicherungsring 150 die konisch verjüngt auslaufenden Endabschnitte eines jeden Verriegelungssteges 155 der Einführöffnung 56 der die Gleit- und Führungsbahnen 60 bildenden Ausnehmungen zwischen dem wulstartigen Ansatz 55 und der Ringwulst 57 zugekehrt sind, so daß bei einem Verdrehen des Sicherungsringes 150 um seine senkrechte Mittelachse in Pfeilrichtung X die Verriegelungsstege 155 in die Gleit- und Führungsbahnen 60 eingeführt werden und somit die bajonettverschlußartige Verriegelung erzielt wird (Fig. 6 und 7).

Um den Sicherungsring 150 auf dem Aufnahmeteil 52 der Nabe 50 so aufsetzen zu können, daß die Verriegelungsstege 155 des Sicherungsringes 150 in die Gleit- und Führungsbahnen 60 eingeführt werden können, weisen die Verriegelungsstege 155 eine Länge auf, die dem Abstand zwischen zwei wulstartigen Ansätzen 55 an der Nabe 50 entspricht. Auf diese Weise sind die Verriegelungsstege 155 in der Aufsetzstellung des Sicherungsringes 150 zwischen je zwei wulstartigen Ansätzen 55 hindurchführbar, bis der Sicherungsring 150 auf der Ringwulst 57 zu liegen kommt und die Verriegelungsstege 155 in die die Gleit- und Führungsbahnen 60 bildenden Ausnehmungen einführbar sind.

Um ein selbsttätiges Lösen des Sicherungsringes 150 von dem Aufnahmeteil 52 bzw. der Nabe 50 zu vermeiden, ist der Sicherungsring 150 mit zusätzlichen Arretierungseinrichtungen versehen. Diese Arretierungseinrichtungen sind als blattfederartige Schnäpper 160 ausgebildet, und zwar in Form von federnd-elastischen Zungen, die in Ausnehmungen 156 an der Innenwandfläche 150a des Sicherungsringes 150 angeordnet sind. Die Anordnung und Ausbildung dieser blattfederartigen Schnäpper 160 ist derart, daß bei auf den Aufnahmeteil 52 der Nabe 50 aufgesetztem Sicherungsring 150, jedoch noch in unverriegelter Stellung, die blattfederartigen Schnäpper 160 von den wulstartigen Ansätzen 55 an dem Aufnahmeteil 52 in ihre Ausnehmungen 156 an der Innenwandfläche 150a des Sicherungsringes 150 gedrückt werden. Erfolgt die Verriegelung des Sicherungsringes 150, indem dieser verdreht wird, dann kommen die blattfederartigen Schnäpper im Bereich von Ausnehmungen 152 zu liegen, die am Umfang des Aufnahmeteils 52 ausgebildet sind. Da die blattfederartigen Schnäpper 160 das Bestreben haben, aus ihren Ausnehmungen 156 in Pfeilrichtung X1 selbsttätig zu federn, kommen die blattfederartigen Schnäpper 160 in den Ausnehmungen 152 an dem Aufnahmeteil 52 zu liegen und bilden dort die Verriegelung insofern, als die freien Enden der blattfederartigen Schnäpper 160 an Anschlägen 153 zu liegen kommen, die die Ausnehmungen 152 in dem Aufnahmeteil 52 begrenzen. Die in diese Ausnehmungen mit den Anschlägen 153 eingreifenden freien Enden der blattfederartigen Schnäpper 160 verhindern somit, daß der Sicherungsring 150 entgegen seiner Drehrichtung zum Verriegeln sich löst und sich von dem Aufnahmeteil 52 abheben kann.

Die Anzahl der blattfederartigen Schnäpper 160 an der Innenwandfläche 150a des Sicherungsringes 150 kann beliebig gewählt sein. Bei dem in Fig. 7 gezeigten Ausführungsbeispiel sind zwei blattfederartige Schnäpper 160 vorgesehen, die im gleichen Abstand voneinander an der Innenwandfläche 150a des Sicherungsringes 150 vorgesehen sind. Die Anzahl der Ausnehmungen 152 im Umfang des Aufnahmeteils 52 der Nabe 50 entspricht dabei der Anzahl der blattfederartigen Schnäpper 160.

Die blattfederartigen Schnäpper 160 sind bei der Herstellung des Sicherungsringes 150 gleichzeitig mit ausgeformt. Der Sicherungsring 150 besteht aus Kunststoffen mit einem federnd-elastischen Verhalten im Falle zungenförmiger Ausgestaltungen, wie dies auf die blattfederartigen Schnäpper 160 zutrifft.

Anstelle von blattfederartigen Schnäppern 160 können auch andersartig ausgebildete Verriegelungseinrichtungen zur Anwendung gelangen. So besteht beispielsweise die Möglichkeit, radial verschiebbare und federbeaufschlagte Bolzen zu verwenden, die in entsprechende Ausnehmungen am Umfang des Aufnahmeteils 52 der Nabe 50 eingreifen, wobei jedoch dann entsprechende Vorkehrungen getroffen sein müssen, um ein Entriegeln insofern zu bewirken, als die Verriegelungsbolzen in ihre Ausgangsstellung zurückgezogen werden müssen, um den Sicherungsring 150 von der Nabe 50 abnehmen zu können.

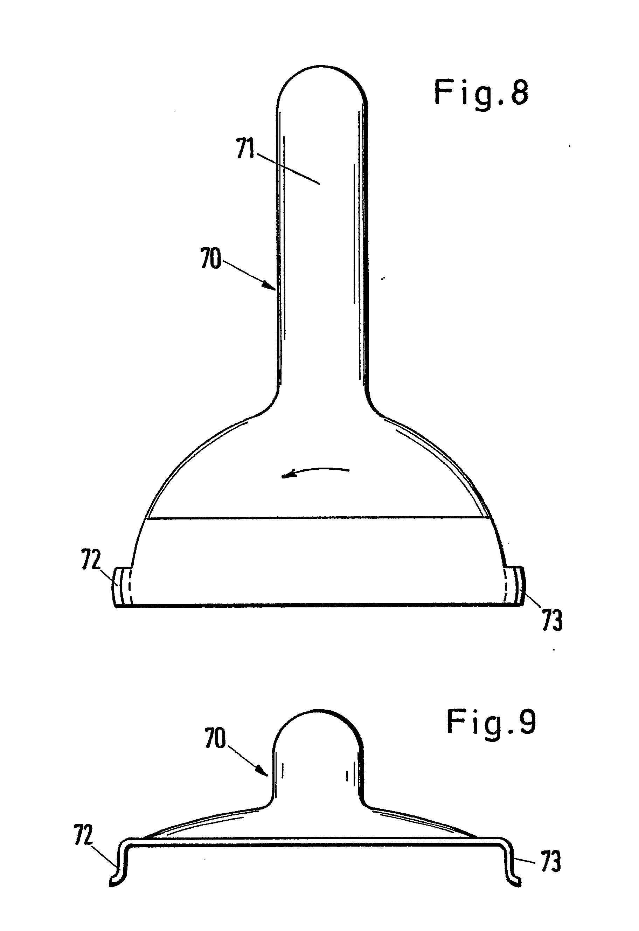

Um den Sicherungsring 150 von der Nabe 50 abnehmen zu können, ist es erforderlich, die blattfederartigen Schnäpper 160 aus ihrer Verriegelungsstellung in ihre Ausgangsstellung in den Ausnehmungen 156 an der Innenwandfläche 150a des Sicherungsringes 150 zu überführen. Hierfür ist der in Fig. 8 und 9 dargestellte Entriegelungsschlüssel 70 vorgesehen, der aus einer griffartigen Handhabe 71 besteht, die an ihrem einen freien Ende zwei in einem Abstand voneinander angeordnete Druckzungen 72, 73 trägt, die etwa senkrecht stehend zur griffartigen Handhabe 71 angeordnet sind. Der Abstand zwischen diesen beiden Druckzungen 72, 73 entspricht dem Abstand der sich gegenüberliegenden blattfederartigen Schnäpper 160, so daß die Druckzungen 72, 73 in die beiden Ausnehmungen 152 an der Nabe 50 einführbar sind. Hierfür weisen entsprechend Fig. 7 die beiden Ausnehmungen 152 an dem Aufnahmeteil 52 zusätzliche Ausnehmungen 75 auf, in die die beiden Druckzungen 72, 73 des Entriegelungsschlüssels 70 einführbar sind.

Sind die Druckzungen 72, 73 des Entriegelungsschlüssels 70 in diese Ausnehmungen 75 eingeführt und wird der Entriegelungsschlüssel 70 in Pfeilrichtung X2 (Fig. 7) verschwenkt, dann werden die beiden blattfederartigen Schnäpper 160, die in den Ausnehmungen 152 des Aufnahmeteils 52 zu liegen kommen, aus diesen Ausnehmungen 152 herausgedrückt und in die Ausnehmungen 156 an der Innenwandfläche 150a des Sicherungsringes 150 bewegt. Dabei werden die blattfederartigen Schnäpper 160 soweit in ihre Ausnehmungen 156 eingeführt, daß im Endbereich der Bewegungsbahn der beiden Druckzungen 72, 73 ein Anschlag 76 freigegeben wird, an dem die beiden Druckzungen 72, 73 zur Anlage gebracht werden. Sind die Druckzungen 72, 73 an diesen Anschlägen 76 zur Anlage gebracht und wird der Entriegelungsschlüssel 70 weiter in Pfeilrichtung X2 verdreht, dann nehmen die Druckzungen 72, 73 den Sicherungsring 150 mit und führen bei weiterer Drehbewegung die Verriegelungsstege 155 aus den Gleit- und Führungsbahnen 60 der Nabe 50 heraus, bis die Verriegelungsstege 155 zwischen den wulstartigen Ansätzen 55 zu liegen kommen, so daß in dieser Stellung dann der Sicherungsring 150 von dem Aufnahmeteil 52 abgenommen werden kann.

Auch das Aufsetzen des Sicherungsringes 150 auf den Aufnahmeteil 52 erfolgt mittels des Entriegelungsschlüssels 70 in der Weise, daß die Druckzungen 72, 73 des Entriegelungsschlüssels 70 in die Ausnehmungen 75 eingeführt werden und bei einem Verdrehen des Entriegelungsschlüssels 70 in Pfeilrichtung X (Fig. 7) nehmen die Druckzungen 72, 73 den Sicherungsring 150 solange mit bis die Verriegelungsstege 155 in den Gleit- und Führungsbahnen 60 zu liegen kommen und der Bajonettverschluß hergestellt ist. Für das Mitnehmen des Sicherungsringes 150 durch die Druckzungen 72, 73 des Entriegelungsschlüssels 70 weisen die Ausnehmungen 75 im Befestigungsbereich der blattfederartigen Schnäpper 160 Anschläge 78 auf (Fig. 7).

Wie Fig. 1 zeigt, weist die Nabe 50 auf ihrer dem Aufnahmeteil 52 abgekehrten Wandfläche 50a im Bereich der Felgenschrauben- bzw. Radbolzen-Durchbrechungen 51 Abstandsringe bzw. Distanzelemente 80 auf, die als austauschbarer Adapter ausgebildet sind. Dadurch ist die Möglichkeit gegeben, durch Abstandsringe 80 unterschiedlicher Größe die Befestigungseinrichtung unterschiedlichen Reifengrößen anpassen zu können.

Die Befestigung einer Gleitschutzvorrichtung 10, bestehend aus der Tragscheibe 20 mit den Gleitschutzarmen 40, an der Felge bzw. dem Rad 11 eines Fahrzeuges unter Verwendung der Befestigungseinrichtung, bestehend aus der Nabe 50 und dem Sicherungsring 150, erfolgt in der Weise, daß nach dem Befestigen der Nabe 50 mittels der Sicherungsschrauben 85, die in die Felgenschrauben 18 oder Muttern geschraubt sind, an der Radfelge 11 die Tragscheibe der Gleitschutzvorrichtung 10 auf den Aufnahmeteil 52 der Nabe 50 aufgesetzt wird. Hierauf wird dann der Sicherungsring 150 aufgesetzt, so daß seine Verriegelungsstege 155 in den Zwischenräumen zwischen den wulstartigen Ansätzen 55 an dem Aufnahmeteil 52 zu liegen kommen. Es erfolgt dann das Einführen der Druckzungen 72, 73 des Entriegelungsschlüssels 70 in die Ausnehmungen 75 und anschließendes Verschwenken des Entriegelungsschlüssels 70 in Pfeilrichtung X (Fig. 7), wodurch der Sicherungsring 150 um seine senkrechte Mittelachse verschwenkt wird, bis die Verriegelungsstege 155 an der Innenwandfläche 150a des Sicherungsringes 150 in dem die Gleit- und Führungsbahnen 60 bildenden Ausnehmungen zu liegen kommen. Gleichzeitig rasten selbstfedernd die blattfederartigen Schnäpper 160 in die Ausnehmungen 152 an dem Aufnahmeteil 52, wodurch die Verriegelung gegen ein unbeabsichtigtes Lösen des Sicherungsringes 150 erfolgt. Dadurch, daß die freien Enden der blattfederartigen Schnäpper 160 in anschlagartigen Ausnehmungen 153 zu liegen kommen, ist eine sichere Verriegelung gewährleistet. Dadurch, daß diese Anschlagausnehmungen 153 hinterschnitten ausgebildet sind und die freien Enden der blattfederartigen Schnäpper 160 eine etwa keilförmige Ausgestaltung aufweisen, ist gewährleistet, daß die blattfederartigen Schnäpper 160 mit ihren freien Enden aus diesen Anschlagausnehmungen 153 nicht herausfedern können.

Auf diese Weise ist die Gleitschutzvorrichtung 10 mittels der Befestigungseinrichtung aus der Nabe 50 und dem Sicherungsring 150 an der Felge 11 des Fahrzeugrades so gehalten, daß die Gleitschutzarme 40 der Gleitschutzvorrichtung 10 die Reifenlauffläche übergreifen.

Das Abnehmen der Gleitschutzvorrichtung 10 erfolgt unter Zuhilfenahme des Entriegelungsschlüssels 70, der wiederum in die Ausnehmungen 75 mit seinen Druckzungen 72, 73 eingeführt wird. Durch Verschwenken des Entriegelungsschlüssels 70 werden die blattfederartigen Schnäpper 160 aus ihrer Verriegelungsstellung in ihre Ausgangsstellung in den Ausnehmungen 156 an der Innenwandfläche 150a des Sicherungsringes 150 bewegt. Gleichzeitig erfolgt ein Verdrehen des Sicherungsringes 150 soweit, bis die Verriegelungsstege 155 des Sicherungsringes 150 aus den Gleit- und Führungsbahnen 60 an dem Aufnahmeteil 52 herausgeführt sind. Der Sicherungsring 150 kann dann abgehoben werden. Es erfolgt dann ein Abziehen der Tragscheibe 20 der Gleitschutzvorrichtung 10 von dem Aufnahmeteil 52 der Nabe 50. Bei weiterem Nichtgebrauch der Gleitschutzvorrichtung 10, jedoch bei einer Bereithaltung der Befestigungseinrichtung, wird lediglich auf die Nabe 50 der Sicherungsring 150 aufgesetzt und verriegelt, so daß jederzeit die Möglichkeit besteht, die Gleitschutzvorrichtung 10 anzubringen, falls dies erforderlich werden sollte.

Die Tragscheibe 20 der Gleitschutzvorrichtung 10 ist mit einer mittigen Durchbrechung versehen, damit die Tragscheibe 20 auf den Aufnahmeteil 52 der Nabe 50 aufsetzbar ist. Der Durchmesser dieser mittigen Durchbrechung ist jedoch größer als der Durchmesser des Aufnahmeteils 52, so daß die auf dem Aufnahmeteil 52 gehaltene Tragscheibe 20 der Gleitschutzvorrichtung 10 exzentrische Bewegungen durchführen kann. Auf diese Weise ist es möglich, daß die die Reifenlauffläche umgreifenden Gleitschutzarme 40 in Verbindung mit der Tragscheibe 20 den Walkbewegungen des abrollenden Reifens sich anpassen können. Außerdem ist der Durchmesser der mittigen Durchbrechung in der Tragscheibe 20 so bemessen, daß die Tragscheibe 20 über die Ringwulst 57 an dem Aufnahmeteil 52 führbar ist. Die Absicherung der Tragscheibe 20 nach oben erfolgt mittels des die Tragscheibe abschnittsweise übergreifenden Sicherungsringes 150, während die Sicherung zur Felge hin durch die Nabe 50 selbst erfolgt.

Um die Gleitschutzvorrichtung 10 an der Felge 11 eines Fahrzeugrades befestigen zu können, ist es erforderlich, daß die Nabe 50 der Gleitschutzvorrichtung an die Felge angeschlossen wird. Dies erfolgt mittels Felgenschrauben, die jedoch eine besondere Ausgestaltung aufweisen müssen, um die eigentlichen Sicherungsschrauben 85 für die Nabe 50 aufnehmen zu können. Aus diesem Grunde ist es erforderlich, Felgenschrauben zu verwenden, die eine spezielle Ausgestaltung aufweisen, um die Nabe 50 befestigen zu können. Hierzu werden meist speziell ausgebildete Felgenschrauben verwendet und wegen der Vielzahl der Kraftfahrzeugtypen ist es auch erforderlich, daß eine Vielzahl von Radfelgenschrauben dann zur Verfügung stehen und auf Vorrat gehalten werden, um die Gleitschutzvorrichtung für die verschiedenen Kraftfahrzeugmodelle verwenden zu können.

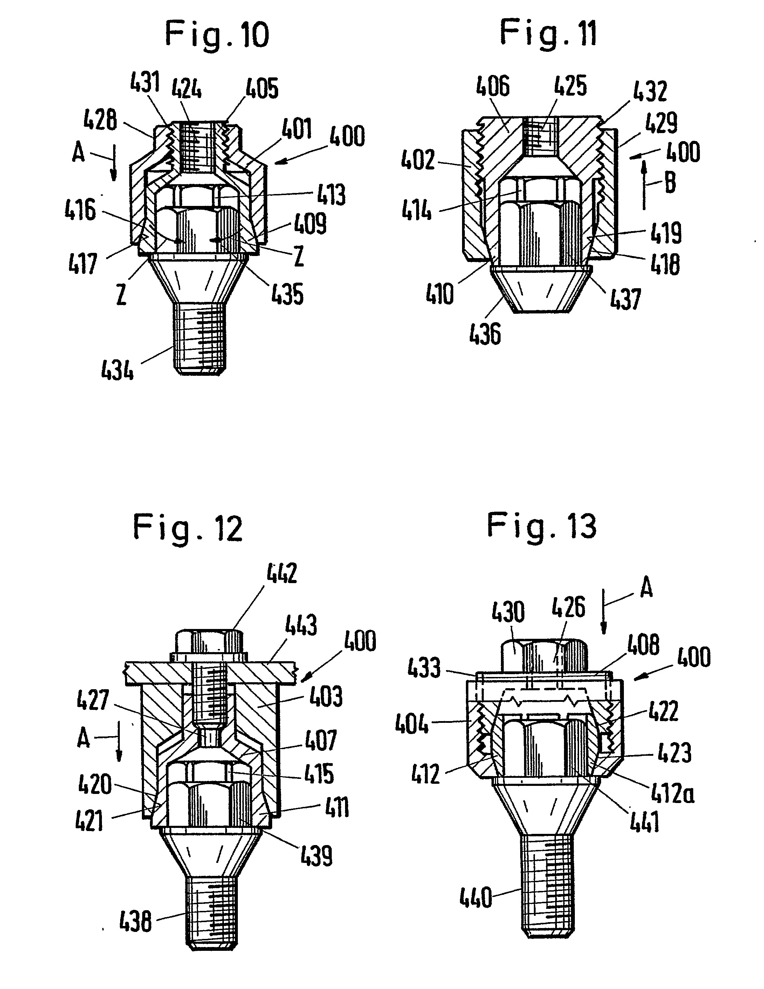

Durch die Verwendung eines Adapters 400, wie in den Fig. 10 bis 19 dargestellt, besteht die Möglichkeit, vorhandene Felgenschrauben zu verwenden und vermittels des Adapters die Sicherungsschrauben befestigen zu können, die zur Sicherung der Nabe 50 dienen. Dieser Adapter 400 in seinen verschiedenen Ausführungsformen ist derart ausgebildet, daß der auf den Schraubenkopf einer Felgenschraube aufgesetzte Adapter die Verbindung zwischen der Felgenschraube und der Sicherungsschraube 85 für die Nabe herstellt. Da der Adapter 400 passend für die verschiedenen Felgenschrauben, Bolzen oder Muttern einsetzbar ist, ist es nicht erforderlich, eine Vielzahl von Adaptern herzustellen und vorrätig zu halten, sondern es ist ausreichend, wenn z.B. drei Adaptergrößen zur Verfügung stehen. Überraschenderweise können mit diesen drei Adaptergrößen alle Felgenschrauben bekannter Kraftfahrzeugmodelle bedient werden.

Der Adapter 400 umgreift bzw. übergreift den Kopf 435, wie Sechskantkopf od.dgl., einer Felgenschraube 434 bzw. eine Mutter oder den Kopf eines Radbolzens.

Bei der in Fig. 10 dargestellten Ausführungsform besteht der Adapter 400 aus einem kappenförmigen Außenteil 401 und aus einem von dem Außenteil übergriffenen, kappenartigen Innenteil 405. Das Außenteil 401 ist über das Innenteil 405 mittels eines bei 431 angedeuteten Gewindes geschraubt. Wie aus Fig. 10 ersichtlich, weist das Innenteil 405 einen halsartigen, eingezogenen oberen Ansatz auf, der mit einem Außengewinde versehen ist, während die obere halsartige Einziehung des Außenteils 401 ein Innengewinde aufweist, so daß das Außenteil 401 über das Innenteil 405 mittels des Gewindes 431 geschraubt werden kann. Das Außenteil 401 weist benachbart zu seinem unteren umlaufenden Rand innenwandseitig einen zum Rand hin sich konisch verjüngenden Wandabschnitt 416 auf, während das Innenteil 405 benachbart zu seinem unteren umlaufenden Rand außenwandseitig einen zum Rand hin sich konisch verbreiternden Wandabschnitt 417 aufweist, so daß im Verbindungszustand des Außenteils 401 mit dem Innenteil 416 die konische Wandfläche 416 gegen die konische Wandfläche 417 gedrückt wird.

Der kappenförmige Teil des Innenteils 405 weist eine Anzahl von armartigen Formgreifern 409 auf, die über senkrecht verlaufende Schlitze 413 in der Innenteilwandfläche voneinander getrennt sind, wobei jedoch diese armartigen Formgreifer 409 mit ihren oberen Enden mit dem Formkörper des Innenteils 405 fest verbunden sind. Durch diese Schlitzausgestaltung sind die Formgreifer 409 in einer gewissen Hinsicht beweglich, d.h. elastisch, und werden beim Aufschrauben des Außenteils 401 auf das Innenteil 405 gegen den Kopf 435 der Schraube 434 derart gepreßt, daß ein fester Sitz des Adapters 400 auf dem Schraubenkopf 435 gewährleistet ist. Die Halterung des Innenteils 405 des Adapters 400 auf dem Schraubenkopf mittels der Formgreifer 409 erfolgt dabei spannzangenartig, so daß die Formgreifer 409 mittels des übergreifenden Außenteils 401 unter Preßsitz gehalten und an dem Schraubenkopf 435 fest anliegen. Wird davon ausgegangen, daß es sich bei dem Schraubenkopf 435 der Schraube 434 um einen Sechskantkopf handelt, dann ist sowohl das Innenteil 405 als auch das Außenteil 401 entsprechend profiliert und sechskantartig ausgebildet, damit ein Übergreifen des Schraubenkopfes 435 gewährleistet ist, wobei die eine gewisse Elastizität bzw. Beweglichkeit aufweisenden Formgreifer 409 dann an den Außenflächen des Sechskantschraubenkopfes anliegen. Die Anzahl der Schlitze 413 an dem Innenteil 405 ist so gewählt, daß sechs armartige Formgreifer 409 ausgebildet werden. Das Außen- und das Innenteil brauchen jedoch nicht sechskantartig ausgebildet zu sein.

Wird das Außenteil 401 über das Innenteil 405 gestülpt und auf das Innenteil 405 aufgeschraubt, dann bewegt sich das Außenteil 401 in Pfeilrichtung A, wobei dann der konusartig ausgebildete umlaufende Wandabschnitt 416 die konusartig ausgebildeten Wandabschnitte 417 der Formgreifer nach innen bewegt, so daß die Formgreifer 409 in Pfeilrichtung Z an den Schraubenkopf 435 gepreßt werden. Auch das Außenteil 401 weist zur Betätigung außenseitig einen Sechskantkopf 428 auf, der vorteilhafterweise gleich dem Sechskantkopf 435 der Felgenschraube 434 ausgebildet ist, so daß kein Spezialbetätigungswerkzeug erforderlich ist, um das Außenteil 401 auf das Innenteil 405 zu schrauben. Das Innenteil 405 weist mittig und in Schraubenlängsrichtung verlaufend eine Gewindebohrung 424 auf, die zur Aufnahme einer in der Zeichnung nicht dargestellten Schraube dient, vermittels der Fremdteile, wie z.B. die Nabe 50 der Gleitschutzvorrichtung 10, dann befestigt wird. Somit ist der Adapter 401 unter Spannsitz auf dem Schraubenkopf 435 der Schraube 434 gehalten. Durch Verdrehen in entgegengesetzter Richtung ist das Außenteil 401 von dem Innenteil 405 abschraubbar, so daß der Adapter 400 von dem Schraubenkopf 435 der Schraube 434 abhebbar ist.

Fig. 11 zeigt eine Ausführungsform eines Adapters 400, bei der das Außenteil 402 mit einem Zugkonus 418, der ziehend gegen den Konus 419 des Innenteils 406 drückt, wenn das Außenteil 402 mittels des Gewindes 432 auf das Innenteil 406 in Pfeilrichtung B geschraubt wird. Dabei werden die durch die Schlitze 414 in der Innenteilwand ausgebildeten, beweglichen Formgreifer 410 gegen den Sechskantkopf 437 der Radmutter 436 gepreßt. Das Außenteil 402 weist außenseitig zur Betätigung einen Sechskant 429 und eine Anschlußgewindebohrung 425 auf. Auch bei dieser Ausführungsform weist das Außenteil 402 benachbart zu seinem unteren umlaufenden Rand innenwandseitig eine zum Rand hin sich konisch erweiternde Wandfläche 418 auf, während das Innenteil 406 benachbart zu seinem unteren umlaufenden Rand außenwandseitig eine zum Rand hin sich konisch verjüngende Wandfläche 419 aufweist, so daß im Verbindungszustand des Außenteils 402 mit dem Innenteil 406 die konische Wandfläche 418 gegen die konische Wandfläche 419 ziehend ist, wobei die Formgreifer 410 gegen den Schraubenkopf gepreßt werden.

Fig. 12 zeigt eine Ausführungsform eines Adapters 400, bei dem ein rundes Außenteil 403 mit einer innenseitigen, konischen Wandfläche 420 versehen ist, die gegen die konische Wandfläche 421 des Innenteils 407 drückt, wenn das Außenteil 403 durch Anziehen der Schraube 442, in dem Aufnahmegewinde 427, beim Befestigen eines Gerätes 443 in Pfeilrichtung A über das Innentei l 407 geschoben wird. Dadurch werden auch die bei dieser Ausführungsform an dem Innenteil 407 ausgebildeten Formgreifer 411, die durch senkrecht verlaufende Schlitze 415 in der Innenteilwand gebildet und somit beweglich, d.g. abbiegbar sind, gegen den Sechskantkopf 439 der Felgenschraube 438 gepreßt. Die einander übergreifenden umlaufenden Randbereiche des Außenteils 403 und des Innenteils 407 weisen eine konische Innen- bzw. Außenflächenausgestaltung auf, wie diese auch bei der Ausführungsform gemäß Fig. 10 vorgesehen ist.

Bei der in Fig. 13 gezeigten Ausführungsform eines Adapters 400 ist ein Innenteil 408 mit einem Betätigungssechskant 430 und einer Aufnahmegewindebohrung 426 versehen, das durch Einschrauben über das Gewinde 433 in das Außenteil 404 in Pfeilrichtung A die beiden konischen Innenwandflächen 422, 423 zusammenbringt und dabei die an dem Innenteil 408 in gleicher Weise wie bei den voranstehend beschriebenen Ausführungsformen ausgebildeten Formgreifer 412, 412a gegen den Sechskantkopf 441 der Radschraube 440 preßt. Wie Fig. 13 erkennen läßt, ist hier eine Doppelkonizität vorgesehen, nämlich einmal im unteren Innenwandbereich des Außenteils und zum anderen im unteren Innenwandbereich des Innenteils, das gegenüber dem Außenteil eine kürzere Länge aufweist.

Werden die Außenteile 401, 402, 403, 404 gegenläufig zu den Pfeilrichtungen A und B zu den Innenteilen 405, 406, 407, 408 bewegt, so lösen sich die Formgreifer 409, 410, 411, 412, 412a von den Sechskantflächen des Sechskantkopfes 435, 437, 439, 441 einer Felgenschraube, einer Mutter oder dem Kopf eines Bolzens.

Die Ausgestaltung des Adapters 400 ist nicht auf die in den Fig. 10 bis 13 dargestellte und vorangehend beschriebene Form beschränkt; sie hängt vom jeweiligen Verwendungszweck und Einsatzgebiet des Adapters ab; so ist der Adapter nicht nur einsetzbar im Kraftfahrzeugbereich, sondern kann überall dort eingesetzt werden, wo zwei Verbindungselemente kraftschlüssig miteinander verbunden werden sollen.

Eine weitere Ausführungsform eines Adapters 400 ist in Fig. 19 dargestellt. Dieser Adapter besteht aus einer Mutter 450, einem kappenförmigen Bauteil 460 und einer Hülse 470. Die Mutter 450 ist bodenseitig mit einem umlaufenden Rand 451 versehen; sie weist eine Längsdurchbohrung 452 und ein bei 453 angedeutetes Innengewinde auf (Fig. 14 und 15). Die Längsdurchbohrung 452 ist so bemessen, daß die Mutter 450 auf das nachstehend näher beschriebene Bauteil 460 des Adapters aufschraubbar ist.

Das kappenförmige Bauteil 460 besteht gemäß Fig. 16 und 17 aus einem Formkörper mit einem oberen eingezogenen halsartigen Abschnitt 462, der mit einer mittigen Längsdurchbohrung 463 versehen ist, die ein bei 464 angedeutetes Innengewinde aufweist. Bei 462 ist ein Außengewinde angedeutet. Der Durchmesser und die Abmessungen dieses halsartigen Abschnittes 462 sind so bemessen, daß die in Fig. 16 und 17 dargestellte Mutter 450 auf den halsartigen Abschnitt 462 des Bauteils 460 aufschraubbar ist. Die Innendurchbohrung 463 des Bauteils 460 dient zur Aufnahme einer in der Zeichnung nicht dargestellten Befestigungs- bzw. Sicherungsschraube zum Befestigen der Nabe 50 zur Befestigung der voranstehend beschriebenen Gleitschutzvorrichtung.

Der halsartige Abschnitt 462 des Bauteils 460 geht unter Ausbildung einer umlaufenden Schulter 461 in einen kappenförmigen Abschnitt über, dessen Wandfläche 466 mit einer Anzahl von Längsschlitzen 467 versehen ist, so daß zwischen zwei Längsschlitzen ein armartiger Formgreifer 469 ausgebildet ist. Die Wandfläche 466 mit den Formgreifern entspricht in ihrer Ausgestaltung in bezug auf die Formgreifer 409, 410, 411, 412, 412 a der in den Fig. 10 bis 13 dargestellten Adapter-Ausführungsform. Auch diese Formgreifer 466 weisen eine gewisse Beweglichkeit aufgrund des verwendeten Materials auf und lassen sich, wie nachstehend näher beschrieben, in Pfeilrichtung Z nach Anziehen der Mutter 450 und aufgesetzter Hülse 470 (Fig. 18) bewegen, damit der Adapter nach dem Aufsetzen seines Bauteils 460 auf eine in der Zeichnung nicht dargestellte Sechskantschraube sicher gehalten und so an dem Kopf der Sechskantschraube befestigt ist, daß ein Abziehen oder selbsttätiges Lösen nicht möglich ist.

Nach dem Aufsetzen der Hülse 470 auf das Bauteil 460, wie in Fig. 19 dargestellt, wird die Mutter 450 auf den halsartigen Abschnitt 462 des Bauteils 460 aufgeschraubt, wobei der umlaufende Rand 451 der Mutter 450 auf dem oberen umlaufenden Rand 471 der Hülse 470 aufliegt. Durch Anziehen, d.h. weiteres Einschrauben der Mutter 450, wird die Hülse 470 in Pfeilrichtung C nach unten bewegt, mit der Folge, daß aufgrund der konischen Ausgestaltung der unteren Randbereiche die Formgreifer 469 in Pfeilrichtung Z gegen die Flächen der Sechskantschraube gepreßt werden, an der der Adapter befestigt werden soll. Um dies zu bewirken, sind die Formgreifer 469 in ihren unteren Randbereichen mit einem umlaufenden, konisch sich nach außen erweiternden Wandabschnitt 468 versehen. Der untere umlaufende Rand 472 der aufgesetzten Hülse 470 kommt dann zur Anlage an der schrägen Wandfläche 468 des Bauteils 460 und bei einer weiteren senkrechten Abwärtsbewegung der Hülse 470 wird dann aufgrund des erfolgenden Preßdruckes ein Anpressen der Formgreifer 469 an den Sechskantkopf einer Schraube erreicht. Der umlaufende Anlagerand 472 der Hülse 470 kann, wie in Fig. 18 dargestellt, nach außen abgeschrägt ausgebildet sein, um ein einwandfreies Gleiten des unteren umlaufenden Randes der Hülse 470 auf der konischen Wandfläche 468 des Bauteils 460 zu erreichen, wenn die Hülse 470 beim Anziehen der Mutter 450 in Pfeilrichtung C nach unten bewegt wird.

Dadurch, daß die Hülse 470 ringförmig ausgebildet ist, stellt die Wandfläche der Hülse eine Gegendruckfläche beim Aufschieben auf die Formgreifer 469 dar, so daß die Wandfläche der Hülse 470 dem Druck der Formgreifer 469 nicht ausweichen kann, sondern die Formgreifer in Richtung der Pfeile Z zum Anpressen an den Sechskantkopf bewegt werden. Im Bereich des oberen und/oder unteren umlaufenden Randes ist die Innenwandfläche der Hülse 470 sich konisch nach außen verjüngend ausgebildet.

Der kappenförmige Abschnitt des Bauteils 460 kann, wie in Fig. 17 dargestellt, kreisförmig sein, jedoch besteht auch die Möglichkeit, eine Querschnittsausgestaltung zu wählen die der Form eines Sechskantkopfes entspricht. Die Kreisform des Querschnitts des Formkörpers 460 erbringt den Vorteil, daß das Bauteil 460 nicht nur auf Schrauben mit einem Sechskantkopf aufsetzbar sind, sondern auch auf Köpfe mit anderer Formgebung. Überraschend ist, daß aufgrund der Ausgestaltung des Adapters 400 dieser auf jeder Kopfform und insbesondere auf Sechskantköpfen derart fest aufsitzt, daß ein Abziehen bzw. Lösen des Adapters von dem Sechskantkopf einer Schraube nicht möglich ist.

Die einzelnen Teile des Adapters 400 bestehen aus metallischen Werkstoffen. Die Bewegbarkeit bzw. die Möglichkeit des leichten Abbiegens und Rückfederns in die Ausgangsstellung der Formgreifer 409, 410, 411, 412, 412a und 469 wird aufgrund geeigneter Werkstoffwahl erreicht. Als Werkstoffe können geeignete Stahlarten, insbesondere Stahl mit federnd-elastischen Eigenschaften Verwendung finden. Jedoch auch andere geeignete Werkstoffe können zur Anwendung gelangen. Der kappenförmige Abschnitt des Bauteils 460 weist die Form eines Zylinders auf, der bodenseitig offen ist und dessen Zylinderwand die Längsschlitze 467 aufweist, wobei die Außenwandfläche des Zylinders zum bodenseitigen Rand nach außen hin sich konisch erweiternd verläuft.

Mit dem Adapter 400 gemäß Fig. 19 ist dagegen eine Einrichtung geschaffen, die es ermöglicht, Bauteile mittels Befestigungsschrauben an vorhandenen und gängigen Schrauben zu befestigen. Der Adapter wird lediglich auf den Kopf der vorhandenen Schraube aufgesetzt und durch Anziehen der Mutter 450 werden vermittels der Abwärtsbewegung der Hülse 470 die Formgreifer 469 gegen den Schraubenkopf gepreßt und durch Preßsitz der Adapter auf dem Schraubenkopf gehalten, wobei der Adapter gegen Abziehen von dem Schraubenkopf gesichert ist, das die Formgreifer 469 spannzangenartig den Schraubenkopf umgreifen. Nur bei einem Lösen der Mutter 450 des Adapters wird der Preßdruck der Formgreifer 490 auf den Schraubenkopf dadurch aufgehoben, daß die Hülse 470 durch Aufwärtsbewegen sich von den konischen Wandabschnitten 468 der Formgreifer 469 löst, so daß dann der Adapter von dem Schraubenkopf abgezogen werden kann. Der Adapter ist auf alle gängigen Schraubenköpfe aufsetzbar, wenn die Abmessungen des Adapters entsprechend gewählt sind. Da alle bekannten Felgenschrauben für Fahrzeugräder in einem Abmessungsbereich mit geringfügigen Abweichungen nach oben oder unten liegen, besteht die Möglichkeit, daß nur mit z.B. drei Größen ausgekommen werden kann, um alle bekannten Felgenschrauben oder -bolzen zu erfassen. Dadurch, daß die Mutter des Adapters außenseitig mit einem Sechskant versehen ist, ist eine Betätigung der Mutter mit bekannten und zur Verfügung stehenden Werkzeugen möglich. Das kappenförmig ausgebildete Bauteil des Adapters weist einen Innenraum und eine Querschnittsform auf, die ein Aufsetzen auf herkömmliche Schraubenköpfe ermöglicht, wobei der Querschnitt des kappenförmigen Bauteils auch sechseckig sein kann, wodurch dann auch die Möglichkeit gegeben ist, den Adapter auf Schraubenköpfe aufzusetzen, die einen kreisförmigen Querschnitt aufweisen. Auch ein Adapter mit einem Bauteil, dessen kappenförmiger Abschnitt einen kreisförmigen Querschnitt aufweist, ist auf den Kopf einer Sechskantschraube aufsetzbar, da in allen Fällen beim Anziehen der Mutter 450 die Formgreifer 469 vermittels der von der Mutter beaufschlagten Hülse 470 gegen den Schraubenkopf gepreßt werden, die diesen spannzangenartig umgreifen.

Diese Wirkung der Formgreifer wird dadurch erreicht, daß die außenliegenden konischen Wandabschnitte 468 im Bereich der Abwärtsbewegung der Hülse 470 beim Eindrehen der Mutter in Richtung zum Schraubenkopf gedrückt werden mit der Folge, daß die Formgreifer gegen den Schraubenkopf gepreßt werden. Die Befestigung der Nabe der vorangehend beschriebenen Gleitschutzvorrichtung erfolgt vermittels einer Sicherungs- oder Befestigungsschraube, die in die Längsbohrung des Innenteils des Adapters eingeschraubt wird, nachdem die Mutter auf dieses Adapterbauteil so aufgeschraubt worden ist, daß der Adapter an dem Kopf der Felgenschraube gehalten ist.

**Patentansprüche**

1. Befestigung von Sicherungsschrauben (85, 442) an den Köpfen (435, 437, 439, 441) insbesondere Sechskantköpfen von Felgenschrauben (18, 434, 438, 440), -bolzen, oder -muttern (436) über Gewindebohrungen (424, 425, 426, 427, 464) zum Befestigen der Nabe (50) einer Gleitschutzvorrichtung (10) für luftbereifte Fahrzeugräder, insbesondere auf Eis- und Schneeflächen, die aus der an der Radscheibe bzw. Felge (11) befestigbaren Nabe (50), die mit Durchbrechungen zum Befestigen an den Felgenschrauben (18, 434, 438, 440), Radbolzen od.dgl. versehen ist, und einer auf der Nabe (50) mittels eines auf einem an der Nabe (50) angeformten Aufnahmeteil (52) befestigbaren Sicherungsringes (150) gehaltenen und verriegelbaren Tragscheibe (20) mit einer Anzahl von in gleichem Abstand voneinander radial verlaufenden Gleitschutzarmen (40) aus einem vorgebogenen, die Reifenlauffläche (14) übergreifenden und außenseitig und innenseitig an ihren freien Enden ein Greifprofil tragenden Profil aus einem Kunststoff oder einem anderen geeigneten Werkstoff mit Spikes oder Metallkörpern außenseitig besteht, dadurch gekennzeichnet, daß jeweils zwischen einer Sicherungsschraube (85, 442) und einer Felgenschraube, -bolzen oder -mutter ein Adapter (400) angeordnet ist, daß der den Kopf (435, 437, 439, 441) der Felgenschraube, -bolzen oder -mutter umgreifende Adapter (400) aus einem kappenartigen Außenteil (401; 402; 403; 404; 450) und einem von dem Außenteil übergriffenen, kappenartigen Innenteil (405; 406; 407; 408; 460) mit festen und/oder losen Formgreifern (409; 410; 411; 412; 412a; 469) besteht, die durch Längsschlitze (413; 414; 415; 467) in der Innenteilwand in Form von spannzangenartigen Abschnitten oder als einzelne Formkörper (412, 412a) ausgebildet sind, wobei durch Ineinanderschrauben oder Ineinanderdrücken des Außenteils (401; 402; 403; 404; 450) über das Innenteil (405; 406; 407; 408; 460) in Schraubenlängsrichtung die Formgreifer (409; 410; 411; 412; 412a; 469) gegen den Kopf (435; 437; 439; 441) der Felgenschraube, -bolzen oder -mutter zur Ausbildung einer dauerhaften, sicheren Verbindung zwischen dem Adapter (400) und dem Kopf (435; 437; 439; 441) preßbar sind, wobei die Verbindung wieder lösbar und wiederverwendbar ist, und daß über den Adapter (400) die Nabe (50) der Gleitschutzvorrichtung mit den Köpfen (435; 437; 439; 441) mittels der in den Innenteilen ausgebildeten Gewindebohrungen (424; 425; 426; 427; 464) und den darin verschraubten Sicherungsschrauben (442) verbindbar ist.

2. Befestigung nach Anspruch 1, dadurch gekennzeichnet, daß das Außenteil (401; 403) des Adapters (400) benachbart zu seinem umlaufenden Rand innenwandseitig eine zum Rand hin sich konisch verjüngende Wandfläche (416; 420) und das Innenteil (409; 407) benachbart zu seinem unteren laufenden Rand außenwandseitig eine zum Rand hin sich konisch verbreiternde Wandfläche (417; 421) aufweist, wobei im Verbindungszustand des Außenteils (401; 403) mit dem Innenteil (416; 420) die konische Wandfläche (415; 420) gegen die konische Wandfläche (415; 420) gegen die konische Wandfläche (417; 421) drückend ist.

3. Befestigung nach Anspruch 1, dadurch gekennzeichnet, daß das Außenteil (402) des Adapters (400) benachbart zu seinem unteren umlaufenden Rand innenwandseitig eine zum Rand hin sich konisch erweiternde Wandfläche (418) und das Innenteil (406) benachbart zu seinem unteren umlaufenden Rand außenwandseitig eine zum Rand hin sich konisch verjüngende Wandfläche (419) aufweist, wobei im Verbindungszustand des Außenteils (402) mit dem Innenteil (406) die konische Wandfläche (418) gegen die konische Wandfläche (419) ziehend ist.

4. Befestigung nach Anspruch 1, dadurch gekennzeichnet, daß das Außenteil (404) in seinem unteren Bereich innenwandseitig eine konisch sich zum Rand erweiternde Wandfläche (423) aufweist, und daß diese konische Wandfläche (423) und eine konische Wandfläche (422) an dem Innenteil (408) gegen die Doppelkonen der losen Formgreifer (412; 412a) drückend sind.

5. Befestigung nach Anspruch 1 bis 4, dadurch gekennzeichnet, daß das Außenteil und das Innenteil des Adapters (400) ein Konusgewinde aufweisen.

6. Befestigung nach Anspruch 1 bis 5, dadurch gekennzeichnet, daß das Außenteil (401; 402) über das Innenteil (405; 406) geschraubt ist.

7. Befestigung nach Anspruch 1 bis 6, dadurch gekennzeichnet, daß das Außenteil (403) über das Innenteil (407) schiebbar ist.

8. Befestigung nach Anspruch 1 bis 7, dadurch gekennzeichnet, daß das Innenteil (408) in das Außenteil (404) schraubbar ist.

9. Befestigung nach Anspruch 1 bis 8, dadurch gekennzeichnet, daß das Innenteil als Blechteil ausgebildet ist.

10. Befestigung nach Anspruch 1 bis 9, dadurch gekennzeichnet, daß das Innenteil (408; 412; 421a) mehrteilig ausgebildet ist.

11. Befestigung nach Anspruch 1 bis 10, dadurch gekennzeichnet, daß das Außenteil als Ziehteil ausgebildet ist.

12. Befestigung nach Anspruch 1 bis 11, dadurch gekennzeichnet, daß die Innen- und Außenteile als Formteile ausgebildet sind.

13. Befestigung nach Anspruch 1 bis 12, dadurch gekennzeichnet, daß das Innenteil einen Anschlußgewindebolzen aufweist.

14. Befestigung nach Anspruch 1 bis 13, dadurch gekennzeichnet, daß die Formgreifer (409; 410; 411; 412; 421a; 469) innenseitig eine pofilierte Oberfläche aufweisen.

15. Befestigung nach Anspruch 1 bis 14, dadurch gekennzeichnet, daß das Innenteil eine Aufnahme für ein Sicherungsschloß aufweist.

16. Befestigung nach Anspruch 1 bis 15, dadurch gekennzeichnet, daß das Außenteil eine Aufnahme für ein Sicherungsschloß aufweist.

17. Befestigung nach Anspruch 1 bis 16, dadurch gekennzeichnet, daß das Innenteil einen Rastanschluß aufweist.

18. Befestigung nach Anspruch 1, dadurch gekennzeichnet, daß der Adapter (400) aus einer Mutter (450) mit einem seitlich auskragenden umlaufenden Rand (451) und mit einer mittigen Längsbohrung (452) mit einem Innengewinde (453), aus einem kappenförmigen, auf den Sechskantkopf der Felgenschraube aufsetzbaren inneren Bauteil (460), der einen oberen halsartig eingezogenen Abschnitt (462) mit einem Außengewinde (465) zur Aufnahme des Innengewindes (453) der Mutter (450) und mit einer mittigen Längsdurchbohrung (463) mit einem Innengewinde (464) zur Aufnahme der Sicherungs- oder Befestigungsschraube für die Nabe (50) der Gleitschutzvorrichtung (10), aufweist, wobei der kappenartige Abschnitt des Bauteils (460) einen kreisförmigen Querschnitt und Längsschlitze (467) in seiner Wand zur Ausbildung einer Anzahl von lageveränderbaren, seitlich abbiegbaren und in ihre Ausgangsstellung zurückfedernden Formgreifern (469) aufweist, und aus einer Hülse (470) besteht, deren Innendurchmesser in etwa dem Außendurchmesser des kappenartigen Abschnittes des Bauteiles (460) entspricht und deren unterer umlaufender Rand (472) bei auf das Bauteil (460) aufgesetzter Hülse (470) und aufgeschraubter Mutter (450) auf den konisch sich nach außen erweiternden unteren Wandflächen (468) der Formgreifer (469) des Bauteils (460) unter auf die Formgreifer (469) ausübenden Preßdruck bei gleichzeitiger Ausbildung eines Preßsitzes der Formgreifer (469) auf dem Sechskantkopf der Felgenschraube aufsitzt.

19. Gleitschutzvorrichtung für luftbereifte Fahrzeugräder, insbesondere auf Eis- und Schneeflächen, die aus einer an der Radscheibe bzw. Felge (11) befestigbaren Nabe (50), die mit Durchbrechungen zum Befestigen an den Felgenschrauben (18, 434, 438, 440), Radbolzen od.dgl. versehen ist, und einer auf der Nabe (50) mittels eines auf einem an der Nabe (50) angeformten Aufnahmeteil (52) befestigbaren Sicherungsringes (150) gehaltenen und verriegelbaren Tragscheibe (20) mit einer Anzahl von in gleichem Abstand voneinander radial verlaufenden Gleitschutzarmen (40) aus einem vorgebogenen, die Reifenlauffläche übergreifenden und außenseitig und innenseitig an ihren freien Enden ein Greifprofil tragenden Profil aus einem Kunststoff oder einem anderen geeigneten Werkstoff mit Spikes oder Metallkörpern außenseitig besteht, dadurch gekennzeichnet, daß die Gleitschutzvorrichtung (10) eine Befestigung mit einem Adapter (400) nach den Ansprüchen 1 bis 18 enthält.

## Claims

1. Fixing a locking screw (85, 442) to the heads (435, 437, 439, 441), more particularly hexagonal heads, of rim bolts (18, 434, 438, 440), wheel bolts or nuts (436) for securing the hub (50) of an anti-skid device (10) for vehicle wheels with pneumatic tyres, especially on ice and snow-covered surfaces, which comprises the hub (50) that is attachable to the wheel disk or rim (11), respectively, which is provided with perforations for the fixing to the rim bolts (18, 434, 438, 440), wheel bolts or the like, and a supporting disk (20) retained and lockable by means of a retaining ring (150) securable to an accommodating part (52) formed on to the hub (50), said supporting disk (20) being fitted with a plurality of anti-skid arms (40) extending radially and spaced apart from each other at uniform intervals, made up of a prebent section engaging over the tyre tread (14) and carrying both on the outside and on the inside on its free ends a gripping section, the prebent section being fabricated from a plastic or some other suitable material with spikes or metal members on the outside, characterized in that, in each case, between a locking screw (85, 442) and a rim screw, rim bolt or nut, an adapter (400) is disposed, in that the adapter (400) engages around the head (435, 437, 439, 441) of the rim screw, bolt or nut comprises a caplike outer portion (401; 402; 403; 450) and a cap-like inner portion (405; 406; 407; 408; 460) that is engaged over be the outer portion by fixed or loose shaped gripping means (409; 410; 411; 412; 412a; 469) which are constructed from longitudinal slots (413; 414; 415; 467) within the inner portion wall in the form of collet-like sections or in the form of individual shaped members (412, 412a), in which, by screwing or pressing the outer portion (401; 402; 403; 404; 450) over the inner portion (405; 406; 407; 408; 460), thus into each other in the longitudinal direction, the shaped gripping means (409; 410; 411; 412; 412a; 469) can be pressed against the head (435; 437; 439; 449; 441) of the rim screw, bolt or nut in order to form a permanent, secure connection between the adapter (400) and the head (435; 437; 439; 441), it being possible for the connection to be detached again and to be re-used, and in that, with the aid of the adapter (400), the hub (50) of then anti-skid device (10) is connectable with the heads (435; 437; 439; 441) by means of the tapped holes (424; 425; 426; 427; 464) constructed in the inner portions and for the locking screws (442) being screwed thereinto.

2. Fastening device according to claim 1, characterized in that the outer portion (401; 403) of the adapter, adjacent to its circumferential rim, on the inner wall side, has a wall area (416; 420) which tapers conically towards the rim, and that the inner portion (409; 407), adjacent to its lower circumferential rim, on the outer wall side, has a wall area (417; 421) which enlarges conically towards the rim, while, in the connected state of the outer portion (401; 403), the conical wall area (415; 420) presses with the inner portion (416; 420) against the conical wall area (417; 421).

3. Fastening device according to claim 1, characterized in that the outer portion (402) of the adapter (400), adjacent to its lower circumferential rim, on the inner wall, has a wall area (418) which enlarges conically towards the rim, and in that the inner portion (406), adjacent to its lower circumferential rim, on the outside wall, has a wall area (419) which tapers towards the rim, while, in the connected state of the outer portion (402), the conical wall area (418), with the inner portion (406), pulls against the conical wall area (419).

4. Fastening device according to claim 1, characterized in that the outer portion (404), within its lower area, on the inner wall, has a wall area (423) that widens towards the rim, and in that this conical wall area (423) and a conical wall area (422) on the inner portion (408) press against the double cones of the loose shaped gripping members (412; 412a).

5. Fastening device according to claims 1 to 4, characterized in that the outer portion and the inner portion of the adapter (400) are provided with a conical thread.

6. Fastening device according to claims 1 to 5, characterized in that the outer portion (401; 402) is screwed over the inner portion (405; 406).

7. Fastening device according to claims 1 to 6, characterized in that the outer portion (403) is slidable over the inner portion (407).

8. Fastening device according to claims 1 to 7, characterized in that the inner portion (408) can be screwed into the outer portion (404).

9. Fastening device according to claims 1 to 8, characterized in that the inner portion is constructed in the form of a sheet metal part.

10. Fastening device according to claims 1 to 9, characterized in that the inner portion (408; 412; 412a) is constructed so as to form several parts.

11. Fastening device according to claims 1 to 10, characterized in that the outer portion is constructed in the form of a drawn metal part.

12. Fastening device according to claims 1 to 11, characterized in that the inner and the outer portion are constructed in the form of shaped parts.

13. Fastening device according to claims 1 to 12, characterized in that the inner portion is provided with a threaded connecting bolt.

14. Fastening device according to claims 1 to 13, characterized in that the shaped gripping means (409; 410; 411; 412; 421a; 469) have a slip-resistant surface on the inside.

15. Fastening device according to claims 1 to 14, characterized in that the inner portion is provided with a recess for a retention locking means.

16. Fastening device according to claims 1 to 15, characterized in that the outer portion is provided with a recess for a retention locking means.

17. Fastening device according to claims 1 to 16, characterized in that the inner portion is provided with a locking connection.

18. Fastening device according to claim 1, characterized in that the adapter (400) comprises a nut (450) with a laterally projecting circumferential rim (451) and with a coaxial longitudinal drilled hole (452) with an internal thread (453), of a cap-like internal component part (460) that can be mounted on the hexagonal head of the rim screw, which is provided with an upper throat-like constricted section (462) with an external thread (465) for receiving the internal thread (453) of the nut (450) and with a central longitudinal drilled hole (463) with an internal thread (464) for receiving the locking or securing screw of the hub (50) of the anti-skid device (10), in which the caplike section of the component part (460) is provided with a circular cross-section and with longitudinal slots (467) in its wall for forming a plurality of positionally changeable shaped pripping means (469) that can be bent aside laterally and which spring back into their initial position, and of a sleeve (470), the internal diameter of which corresponds approximately to the outer diameter of the caplike section of the component part (460) and the lower circumferential rim (472) of which, with the sleeve (470) mounted on the component part (460) and with the nut (450) screwed on to the conically outwardly widening lower wall area (468) of the shaped gripping means (469) of the component part (460), while exerting a pressing effect on the shaped gripping means (469) while simultaneously forming a press fit of the shaped gripping means (469), is seated upon the hexagonal head of the rim screw.

19. Anti-skid device for vehicle wheels with pneumatic tyres, especially on ice and snow-covered surfaces, which comprises a hub (50) attachable to the wheel disk or rim (11), respectively, which is provided with perforations for the fixing to the rim bolts (180, 434, 438, 440), wheel bolts or the like, by means of a supporting disk (20) retained and lockable by means of a retaining ring (150) securable to an accommodating part (52) formed on to the hub (50), said supporting disk (20) being fitted with a plurality of antiskid arms (40) extending radially and spaced apart from each other at uniform intervals, made up of a prebent section which engages over the tyre tread and which carries on the outside and on the inside, on its free ends, a gripping section, the prebent section being fabricated from a plastic or some other suitable material with spikes or metal members on the outside, characterized in that the anti-skid device (10) comprises a fastening device with an adapter (400) according to the claims 1 to 18.

**Revendications**

1. Fixation de vis de serrage (85, 442) aux têtes (435, 437, 439, 441), en particulier aux têtes hexagonales de vis de jante (18, 434, 438, 440), boulons de jante ou écrous de jante (436) par des forures taraudées (424, 425, 426, 427, 464) pour la fixation du moyeu (50) d'un dispositif antidérapant (10) pour roues de véhicules sur pneus, en particulier sur des surfaces verglacées ou enneigées, qui se compose du moyeu (50) pouvant être fixé au disque de roue et/ou à la jante (11) et équipé de découpures pour la fixation aux vis de jante (18, 434, 438, 440), pivots de roue ou équivalent et d'un disque porteur (20), pouvant être bloqué, maintenu sur le moyeu (50) à l'aide d'un anneau de blocage (150) pouvant être fixé sur une partie de logement (52) moulée sur le moyeu (50), avec une multitude de bras antidérapants (40) placés dans le sens radial à la même distance les uns des autres et constitués par un profil précambré, recouvrant la chape du pneu (14) et portant un profil de prise sur la face extérieure et la face intérieure à leurs extrémités libres, en une matière synthétique ou en une autre matière appropriée avec des crampons ou des corps métalliques sur sa face extérieure, caractérisée en ce qu'un adaptateur (400) est placé respectivement entre une vis de serrage (85, 442) et une vis de jante, un boulon de jante ou un écrou de jante, que l'adaptateur (400) enveloppant la tête (435, 437, 439, 441) de la vis de jante, du boulon de jante ou de l'écrou de jante se compose d'une partie extérieure (401, 402, 403, 404, 450) du type capuchon et d'une partie intérieure (405, 406, 407, 408, 440) du type capuchon enveloppée par la partie extérieure avec des griffes moulées (409, 410, 411, 412, 412a, 469) fixes et/ou mobiles qui sont configurées par des fentes longitudinales (413, 414, 415, 469) dans la paroi de la partie intérieure sous forme de portions du type pinces de serrage ou comme corps moulés séparés (412, 412a), les griffes moulées (409, 410, 411, 412, 412a, 469) pouvant, par le vissage ou l'enfoncement de la partie extérieure (401, 402, 403, 404, 450) dans la partie intérieure (405, 406, 407, 408, 460) dans le sens longitudinal de la vis, être pressées contre la tête (435, 437, 439, 441) de la vis de jante, du boulon de jante ou de l'écrou de jante pour former un assemblage durable et sûr entre l'adaptateur (400) et la tête (435, 437, 439, 441), l'assemblage étant amovible à nouveau et réutilisable et qu'au moyen de l'adaptateur (400) le moyeu (50) du dispositif antidérapant peut être relié aux têtes (435, 437, 439, 441) au moyen des forures taraudées (424, 425, 426, 427, 464) formées dans les parties intérieures et aux vis de serrage (442) qui y sont vissées.

2. Fixation selon la revendication 1, caractérisée en ce que la partie extérieure (401, 403) de l'adaptateur (400) présente, au voisinage de son bord périmétrique sur la face de la paroi intérieure, une surface de paroi (416, 420) qui s'effile de manière conique vers le bord et que la partie intérieure (409, 407) présente, au voisinage de son bord inférieur, sur la face de la paroi extérieure, une surface de paroi (417, 421) qui s'élargit de manière conique vers le bord, la surface de paroi conique (415, 420) exerçant une pression contre la surface de paroi conique (417, 421) lorsque la partie extérieure (401, 403) est reliée à la partie intérieure (416, 420).

3. Fixation selon la revendication 1, caractérisée en ce que la partie extérieure (402) de l'adaptateur (400) présente, au voisinage de son bord périmétrique inférieur sur la face de la paroi intérieure, une surface de paroi (418) qui s'élargit de manière conique vers le bord et que la partie intérieure (406) présente, au voisinage de son bord périmétrique inférieur sur la face de la paroi extérieure, une surface de paroi (419) qui s'effile de manière conique vers le bord, la surface de paroi conique (418) effectuant une traction sur la surface de paroi conique (419) lorsque la partie extérieure (402) est reliée à la partie intérieure (406).

4. Fixation selon la revendication 1, caractérisée en ce que la partie extérieure (404) présente, dans sa zone inférieure sur la face de la paroi intérieure, une surface de paroi (423) qui s'élargit de manière conique vers le bord et que cette surface de paroi conique (423) et une surface de paroi conique (422) sur la partie intérieure (408) exercent une pression contre les doubles cônes des griffes moulées mobiles (412, 412a).

5. Fixation selon les revendications 1 à 4, caractérisée en ce que la partie extérieure et la partie intérieure de l'adaptateur (400) présentent un filet conique.

6. Fixation selon les revendications 1 à 5, caractérisée en ce que la partie extérieure (401, 402) est vissée sur la partie intérieure (405, 406).

7. Fixation selon les revendications 1 à 6, caractérisée en ce que la partie extérieure (403) peut glisser sur la partie intérieure (407).

8. Fixation selon les revendications 1 à 7, caractérisée en ce que la partie intérieure (408) peut être vissée dans la partie extérieure (404).

9. Fixation selon les revendications 1 à 8, caractérisée en ce que la partie intérieure est configurée comme une pièce en tôle.

10. Fixation selon les revendications 1 à 9, caractérisée en ce que la partie intérieure (408, 412, 421a) est configurée en plusieurs parties.

11. Fixation selon les revendications 1 à 10, caractérisée en ce que la partie extérieure est configurée comme une pièce emboutie.

12. Fixation selon les revendications 1 à 11, caractérisée en ce que les parties intérieures et extérieures sont configurées comme des pièces moulées.

13. Fixation selon les revendications 1 à 12, caractérisée en ce que la pièce intérieure présente un boulon fileté de raccord.

14. Fixation selon les revendications 1 à 13, caractérisée en ce que les griffes moulées (409, 410, 411, 412, 421a, 469) présentent une surface profilée sur la face intérieure.

15. Fixation selon les revendications 1 à 14, caractérisée en ce que la pièce intérieure présente un logement pour une serrure de blocage.

16. Fixation selon les revendications 1 à 15, caractérisée en ce que la pièce extérieure présente un logement pour une serrure de blocage.

17. Fixation selon les revendications 1 à 16, caractérisée en ce que la pièce intérieure présente un raccord à encoche.

18. Fixation selon la revendication 1, caractérisée en ce que l'adaptateur (400) se compose d'un écrou (450) avec un bord périmétrique (451) qui fait saillie latéralement et avec une forure longitudinale (452) centrale avec un filet intérieur (453), d'un élément intérieur (460) en forme de capuchon, qui peut être placé sur la tête hexagonale de la vis de jante et qui présente une portion supérieure (462) rentrée à la façon d'une gorge avec un filet extérieur (465) pour loger le filet intérieur (453) de l'écrou (450) et avec une perforation longitudinale (463) centrale avec un filet intérieur (464) pour loger la vis de serrage ou de fixation du moyeu (50) du dispositif antidérapant (10), la portion du type capuchon de l'élément (460) présentant une section circulaire et des fentes longitudinales (467) dans sa paroi pour configurer une multitude de griffes moulées (469) à position variable, pouvant se courber sur le côté et revenir élastiquement à leur position de départ, et qui se compose d'une douille (470) dont le diamètre intérieur correspond approximativement au diamètre extérieur de la portion de type capuchon de l'élément (460) et dont le bord périmétrique inférieur (472) est logé sur la tête hexagonale de la vis de jante, lorsque la douille (470) est placée sur l'élément (460) et lorsque l'écrou (450) est vissé sur les surfaces de paroi inférieures (468) qui s'élargissent de manière conique vers l'extérieur sous la pression de compression exercée sur les griffes moulées (469) tout en formant simultanément un ajustage serré des griffes moulées (469).

19. Dispositif antidérapant pour roues de véhicules sur pneus, en particulier sur des surfaces verglacées ou enneigées, qui se compose d'un moyeu (50) pouvant être fixé au disque de roue et/ou à la jante (11) et équipé de découpures pour la fixation aux vis de jante (18, 434, 438, 440), pivots de roue ou équivalent et d'un disque porteur (20) pouvant être bloqué, maintenu sur le moyeu (50) à l'aide d'un anneau de blocage (150) pouvant être fixé sur une partie de logement (52) moulée sur le moyeu (50), avec une multitude de bras antidérapants (40) placés dans le sens radial à la même distance les uns des autres et constitués par un profil précambré, recouvrant la chape du pneu et portant un profil de prise sur la face extérieure et la face intérieure à leurs extrémités libres, en une matière synthétique ou une autre matière appropriée avec des crampons ou des corps métalliques sur la face extérieure, caractérisé en ce que le dispositif antidérapant (10) contient une fixation avec un adaptateur (400) selon les revendications 1 à 18.

EP 0 214 623 B1

Fig.1

# Fig.2

EP 0 214 623 B1

Fig.3

Fig.4

Fig.5

Fig.6

Fig.7

EP 0 214 623 B1

Fig.8

71

70

72

73

Fig.9

70

72

73

## Fig. 10

431 424 405
428 401 400
A
416 413
417 409
Z Z
Z 435
434

## Fig. 11

406 425 432
429
402 400
414 B
419
418
410 437
436

## Fig. 12

442
443
400
427 403
A 407
420 415
421 411
439
438

## Fig. 13

430 426 A
408 400
433 422
404 423
412 412a
441
440

Fig. 14

450

451

Fig. 15

453

452

450

451

Fig. 16

463  464

465

460

462

461

469

466

468

C

Fig. 17

467

460

466

467

469

469

Fig. 18

470

471

472

Fig. 19

400

450

460

A

470

Z

Z

Z